# EUROPEAN PATENT APPLICATION

(11) **EP 3 001 376 A1**
(43) Date of publication of application: **30.03.2016**
(21) Application number: 15174220.2
(22) Date of filing: 29.06.2015
(51) Int. Cl.: G06Q 30/02

(54) **METHOD OF SEARCHING FOR INFORMATION OF ELECTRONIC LABEL AND SYSTEM THEREFOR**

(30) Priority: 23.09.2014 KR 20140127119
(71) Applicant: Samsung Electro-Mechanics Co., Ltd., Gyeonggi-do (KR)
(72) Inventor: JANG, Dae Min, Gyeonggi-do (KR); PARK, Young Seo, Gyeonggi-do (KR); RYU, Hoon, Gyeonggi-do (KR); PARK, Eun Bae, Gyeonggi-do (KR)
(74) Representative: Grünecker Patent- und Rechtsanwälte PartG mbB

(57) **Abstract**

A technology of an electronic label showing information of products displayed in a store is disclosed. A system for searching for information of an electronic label according to an exemplary embodiment may include: a server; a repeater; and an electronic label that includes a communicator, storage, a display, and a controller. The server may receive a product search request message and transmit a product search result corresponding to the product search request message. The communicator may perform communications with the repeater. The controller may include an information searcher and an information display. The information searcher may generate a product search request message from information on a search request that a user has input and transmits the product search request message to the repeater. The information display may control the product search result to be displayed on the display.

## Description

### CROSS-REFERENCE TO RELATED APPLICATION(S)

This application claims the benefit under 35 U.S.C. §119(a) of Korean Patent Application No. 10-2014-0127119, filed on September 23, 2014, in the Korean Intellectual Property Office, the entire disclosure of which is incorporated herein by reference for all purposes.

### BACKGROUND

### 1. Field

The following description relates to a technology regarding electronic labels that show information on products displayed in a store.

### 2. Description of the Related Art

An electronic information label (EIL; hereinafter referred to as 'electronic label') is an electronic device that can substitute a paper label that shows information (e.g., product name, price, place of origin, etc.) on a product display stand in a store. The electronic label communicates with a server through a repeater. The electronic labels controlled by the same repeater may be included in one group. The electronic labels may be divided into many groups, and each group's information may be managed. Furthermore, these electronic labels operate on battery power, and so to reduce power consumption, the electronic labels run only during when it is in wake-up mode, because this is the time required for the information updates; when they are not in wakeup mode, the electronic labels go into sleep mode. During wake-up mode, electronic labels listen to the communication at a server; and if there is data to be received from the server, the electronic labels receive and store the data.

Electronic labels primarily show information on the price of products; however, sometimes a search for information on a specific product is needed. In big-box stores, it is not easy to find the desired products, which is why, in the past, customers had to personally find store managers or clerks and request assistance. Thus From the store's point of view, this practice of directing customers to the desired products one at a time may have incurred high costs, since big-box stores tend to have many customers at a time.

### SUMMARY

A method of searching for information of electronic labels in order to find products displayed in stores and a system therefor are suggested.

Furthermore, a technology for reducing the time it takes to search for a product in a store is suggested.

In one general aspect, a system for searching information of an electronic label includes a server, a repeater, and an electronic label; and the system may transmit and/or receive information with the server through the repeater.

The electronic label may receive an input of information on a search request from a user. The electronic label may receive the input of information on a search request through a touch panel.

The electronic label may display a product search result that has been received from the repeater.

The repeater may store and transmit, to the electronic label, a product search request message and the product search result corresponding thereto.

The product search result may include a product location.

The system may further include a terminal device to receive an input of the information on a search request from the user, transmit the information on a search request to the electronic label, receive the product search result from the electronic label, and display the product search result.

Other features and aspects may be apparent from the following detailed description, the drawings, and the claims.

### BRIEF DESCRIPTION OF THE DRAWINGS

FIG. 1 is a rough diagram illustrating an electronic labelling system according to an exemplary embodiment.
FIG. 2 is a rough diagram illustrating an electronic label according to an exemplary embodiment.
FIG. 3 is a diagram illustrating a product search result according to an exemplary embodiment.
FIG. 4 is a rough diagram illustrating a terminal device according to an exemplary embodiment.
FIG. 5 is a diagram illustrating a product search result according to another exemplary embodiment.
FIG. 6 is a rough diagram illustrating an electronic label according to another exemplary embodiment.
FIG. 7 is a flowchart illustrating a product search method using electronic labels according to an exemplary embodiment.
FIG. 8 is a flowchart illustrating a product search method using electronic labels according to another exemplary embodiment.
FIGS. 9 and 10 are flowcharts illustrating a product search method using a terminal device and an electronic label according to yet another exemplary embodiment.

Throughout the drawings and the detailed description, unless otherwise described, the same drawing reference numerals will be understood to refer to the same elements, features, and structures. The relative size and depiction of these elements may be exaggerated for clarity, illustration, and convenience.

### DETAILED DESCRIPTION

The following description is provided to assist the reader in gaining a comprehensive understanding of the methods, apparatuses, and/or systems described herein. Accordingly, various changes, modifications, and equivalents of the methods, apparatuses, and/or systems described herein will be suggested to those of ordinary skill in the art. Also, descriptions of well-known functions and constructions may be omitted for increased clarity and conciseness.

In the present disclosure, 'information on a search request' indicates information that a user inputs to search a specific product in a store. The information on a search request may be the name of a specific product that the user desires to search or a keyword regarding a specific product. For example, if a user desires to search for information about a specific brand's milk, the information on a search request may be the 'product name' of the specific brand's milk. Alternatively, the information on a search request may be the 'milk', which may be a keyword for the specific brand's milk.

A "product search request message' is a system message for requesting a system to search for the product by using the search request information that the user has input. For example, the message may be a communications message, which is generated for transmitting, to a repeater, the information on a search request that the user has input.

Corresponding to the product search request message is the 'product search result', which is the result acquired after searching for information on the product in a store. The product search result may include the product's location information, direction information, price information, map information, etc. However, the product search result is not limited thereto and may include any information related to the product.

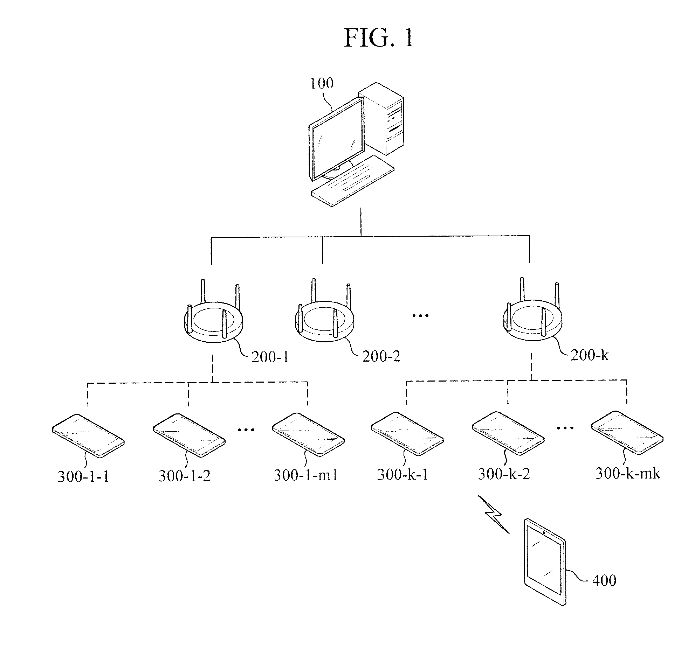

FIG. 1 is a rough diagram illustrating an electronic labelling system according to an exemplary embodiment.

Referring to FIG. 1, an electronic labelling system, according to an exemplary embodiment, receives a product search request message, and consists of a server 100 that transmits a product search result that corresponds to the message, a repeater 200 that relays the result, and an electronic label 300.

In an exemplary embodiment, the electronic label 300 shows the product information received from the server 100. The electronic label 300 consists of a repeater 200, a communicator that performs communications with the repeater 200, storage, a display, and a controller. In the exemplary embodiment, the controller consists of the following elements: 1) an information searcher that generates a product search request message from information on a search request that a user has input and transmits the generated message to the repeater 200 and 2) an information display that controls the product search result received from the repeater 200 to be shown on the display.

The server 100 stores and distributes data for the purpose of information management. Specifically, the server 100 stores the product information (e.g., prices of the products displayed in the store); if a product search request message is received, the server 100 searches for the product information corresponding to the product search request message and transmits the product search result. Here, the server 100 may include: 1) a product database that stores the product information needed for the system operation and as well as information regarding management of the system, and 2) middleware that performs the role of connecting and relaying the database to an external device. Also, the server 100 may acquire, in real-time, information related to the sales of a product in a store in association with other means, such as a point-of-sale (POS) system (not illustrated).

The repeater 200 relays information between the electronic label 300 and the server 100. The repeater 200 may be connected to the server 100 over a wired network (e.g., Ethernet) and to the electronic label 300 over a wireless network (e.g., Wi-Fi or ZigBee). For example, the repeater 200 may be a Wi-Fi access point (AP) or a ZigBee Gateway.

The electronic label 300 transmits a product search request message to the repeater 200, and receives a product search result through the repeater 200. For example, the electronic label 300 and the repeater 200 may be connected over a wireless network (e.g., Wi-Fi, Bluetooth®, ZigBee communications, etc.). However, the electronic label 300 and the repeater 200 may be connected over a wired network as needed.

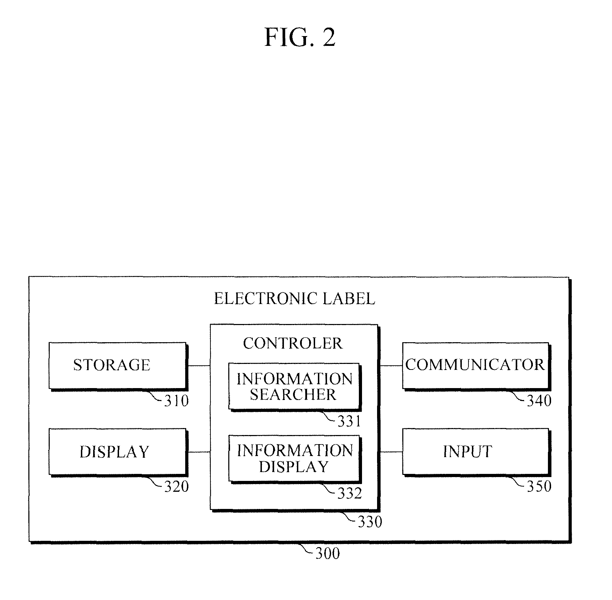

FIG. 2 is a rough diagram illustrating an electronic label according to an exemplary embodiment.

Referring to FIG. 2, an electronic label 300, according to an exemplary embodiment, consists of storage 310, a display 320, a controller 330, and a communicator 340. The configuration of the electronic label 300 illustrated in FIG. 2 is an example, and the electronic label 300 may be composed of a part of the modules illustrated in FIG. 2, and/or other additional modules, which are necessary for the operations.

The electronic label 300 is attached to a location on a kiosk in which products are displayed in a store, wherein the location is easy for a buyer to see, and the electronic label 300 may show information on the products displayed on the kiosk.

The storage 310 stores information that includes the product information or the product search result, which have been received from a system operating program, temporary data, and the repeater 200. The storage 310 may be a storage medium that includes memory, a hard disk drive (HDD), etc.

The display 320 shows the product information or the product search result. The display 320 can function as an electronic paper display (EPD) that maintains an information display state even without a power supply. The display 320 is not limited thereto, and as such, it may be a device that includes a liquid-crystal display (LCD), a plasma display panel (PDP), a light-emitting diode (LED), a cathode ray tube (CRT), etc.

There are many well-known EPDs, some of which are Xerox Corporation's twist ball type, which uses a hemispherical twist ball charged with electrostatic charges; E-ink Corporation's electrophoresis display, which applies electrophoresis and microcapsules; Kent Display Inc.'s cholesterol liquid crystal display, which use cholesterol liquid crystal display. For example, according to an exemplary embodiment illustrated in the present disclosure, the EPDs may be products, which are made to include: 1) a thin film transistor (TFT) substrate in which the TFT is formed on a polysilicon layer deposited on a plastic substrate, 2) a transparent electrode substrate), and 3) a microcapsule layer sealed there in between and formed with CMOS circuits by re-crystalizing a corner area of the TFT substrate.

The controller 330 consists of an information searcher 331 that generates a product search request message from the information on a search request that the user has input and transmits said product search request message to a repeater; and an information display 332 that controls the product search result received from the repeater to be displayed on the display.

If the information searcher 331 of the electronic label 300 generates the product search request message and transmits said product search request message to the repeater 200 through the communicator 340, the repeater 200 transmits the received product search request message to the server 100. The repeater 200 receives, from the server 100, the product search result corresponding to the product search request message and transmits the product search result to the electronic label 300. The information display 332 of the electronic label 300 then displays the received product search result on the display 320.

The communicator 340 performs communications with the repeater 200. In an exemplary embodiment, the communicator 340 may be a Wi-Fi or ZigBee module.

The electronic label 300 may further include an input 350. The input 350 receives the input of the information on a search request from a user and outputs the information to the information searcher 331.

Here, the input 350 may include a touch panel. A user may input the information on a search request through the touch panel. The touch panel indicates a transparent switch panel, in combination with CRT, LCD, etc., through which a user can control a device by directly pushing a place where sentences, pictures, etc., are displayed. The touch panel is a kind of interactive graphic input device through which a user can directly set a location in the store via the screen. When a user touches the CRT screen which is covered with a transparent panel, the location is input to a computer.

The touch panel may include an optical touch panel that uses infrared rays; a transparent electrode touch panel that uses the contact point on a transparent conductive film, whereby a polyester film is covered with an indium tin oxide (ITO) film ; a transparent conductive film touch panel where stainless steel wire has been put into the transparent conductive film; an electrode capacity touch panel that detects a change of static capacitors, a touch panel that detects the point on the surface via pressure sensors which are arranged around the panel and which pick up pressure distribution of a user's fingertip upon contact with the panel.

In another exemplary embodiment, a user may input information on a search request through speech recognition. Speech recognition, or voice recognition, is the technology of understanding and converting the speech of humans into character (code) information that a computer can process. In speech recognition, there is a method of extracting and isolating a vocal register that characterizes vowels or the equivalent features thereto by analyzing vibrations based on a frequency.

In yet another exemplary embodiment, a user may input the information on a search request through an auxiliary keypad.

The repeater 200 may further include a search cache. The search cache stores, in storage, a product search request message received from the electronic label 300, as well as a product search result received from the server 100. The search cache transmits a product search result of the storage to the electronic label in a case in which the product search result corresponding to the product search request message exists in the storage.

Use of the search cache in the repeater 200 may reduce the load of a server and the entire search time because there is no need to use the server for information on products.

For example, if a user searches for information about a specific brand's milk in a store, the search cache stores, in the storage, 1) the product name of the specific brand's milk, which is the information on a search request input by the user, and 2) the product search result acquired after searching for the information about the specific brand's milk, which has been received from the server 100. Afterwards, if the user puts in a product search request for the same product by entering the product name of the same brand's milk as the information on the search request, the repeater 200 does not transmit the product search request message to the server 100. The storage of the repeater 200 has kept the product name of the brand's milk and its product search result, and as such, the search cache directly transmits, to the electronic label, the product search result stored in the storage of the repeater 200.

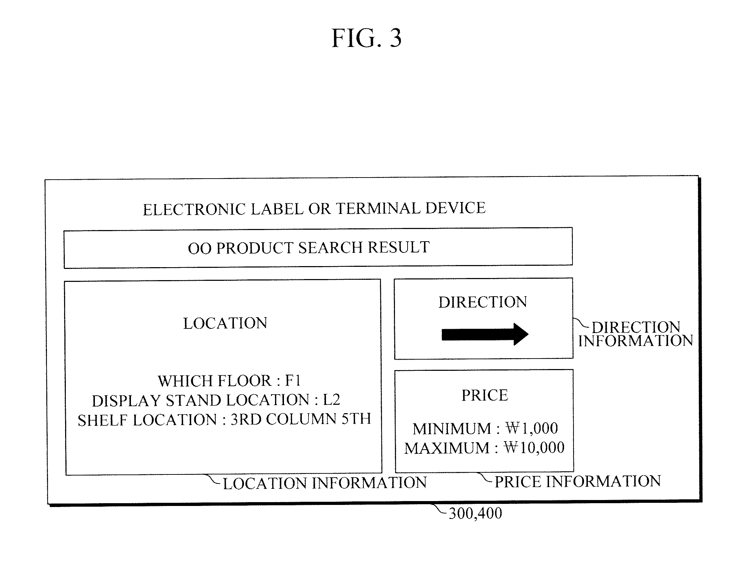

FIG. 3 is a diagram illustrating a product search result according to an exemplary embodiment.

Referring to FIG. 3, a product search result may include location information of the product. Here, the 'location information' of the product refers to an actual location of the product in a store, and includes information regarding the floor where the product is located, the location of the display stand on its relevant floor, the shelf location on the relevant display stand, and directions to where the product is located. The location information of the product is not limited thereto, in which any information to find the relevant product may be included.

The directions regarding where the product is located are to roughly show the directions to where the product is located based on a user's present location, and may be shown using symbols and the like. For example, the directions may be shown using arrows.

The location information of the product may further include price information. For example, if several prices about one product exist in the product search result, the price information may include both the minimum and maximum prices among the searched product prices.

Otherwise, if no product search result exists, the server 100 may transmit a message that shows the product cannot be found, or in other words, a product search unavailable message. This product search unavailable message is transmitted as the product search result to the electronic label 300 through the repeater 200. In such a case, the electronic label 300 may display a message for inputting new search information on the display 320 so as to prompt a user to input other information on the search request.

Alternatively, the electronic label 300 may transmit the received product search unavailable message to a terminal device 400. The communications between the electronic label 300 and the terminal device 400 is specifically described below.

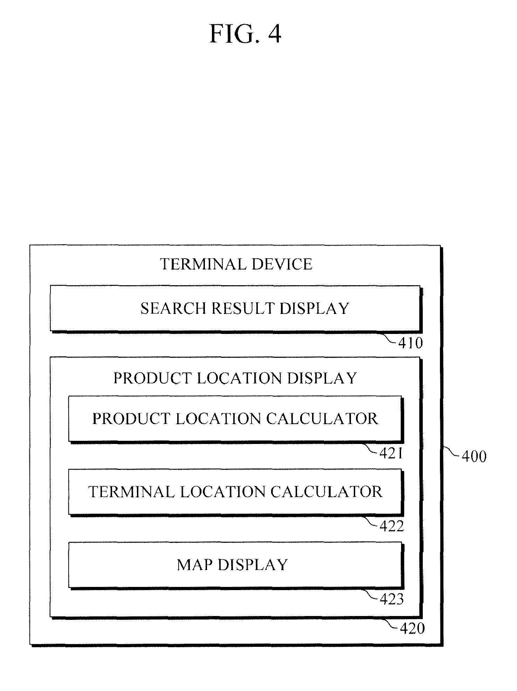

FIG. 4 is a rough diagram illustrating a terminal device according to an exemplary embodiment.

A system for searching for information of an electronic label may further include a terminal device 400.

Referring to FIG. 4, the terminal device 400 receives an input of information on a search request from a user and transmits the information to an electronic label 300. The terminal device 400 includes a search result display 410 that receives a product search result from the electronic label 300 and displays the information.

A terminal device 400 may further include a product location display 420. Amid all the information of the product search result that the product location display 420 has received, the product location display 420 displays the product's location information on a store map.

Here, the product location display 420 of the terminal device 400 may include a product location calculator 421, a terminal location calculator 422, and a map display 423.

The product location calculator 421 calculates the location of the product from the received product search result and displays the location of the product. The location of the product is managed with an identification number on the electronic label in an electronic labeling system.

The terminal location calculator 422 acquires the present location of the terminal device 400 via an indoor positioning system (IPS) and displays the present location. The IPS refers to a system for confirming and tracking a location, which can be used in limited space (e.g., within a short distance or an indoor area) based on precise location information. In an exemplary embodiment, there is no specific limit to execution of a method of calculating the present location of the terminal device 400, and as such, any well-known, pre-existing indoor positioning algorithm, or the like, may be used so as to calculate the present location of the terminal device 400.

Depending on the wireless communications technology for each positioning method, an indoor positioning method can be divided into a triangulation method, a proximity identification method, and a fingerprinting method. The triangulation method is to calculate a location, which a user wants to know, using the measured distance from three points. In the proximity identification method, there are: a method of monitoring a wireless access point so as to know whether an object, which is a position tracking target, comes into a usable range of one of or a plurality of access points in a wireless cell network; and a method of calling and identifying an automatic identification system or tag information and finding out the present location. The location fingerprint method is a fingerprint technique, which is a method for randomly selecting several locations in advance in a service area and estimating the location by using information on the signal strength that has been collected from the selected locations.

The map display 423 displays the location of the product and the present location of the terminal device on a store map.

Such a terminal device 400 may indicate all kinds of terminal devices, which individuals can carry, and which are capable of implementing various functions using application programs, as well as the wireless communications. For example, the terminal device 400 may be a personal mobile communications service terminal device, a personal digital assistant (PDA), a tablet, a laptop, a wireless LAN terminal device, a shopping guide device that is equipped in a cart placed in a store, a hand-held device that a store provides, etc.

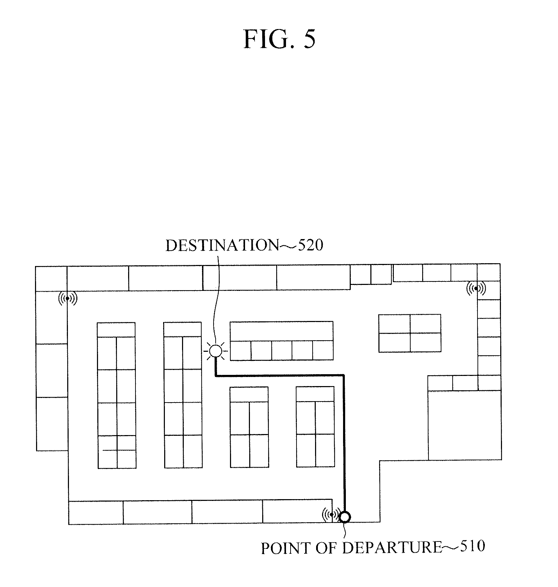

FIG. 5 is a diagram illustrating a product search result according to another exemplary embodiment.

Referring to FIG. 5, a product search result may be shown in a terminal device 400, including a location of a product and a present location of the terminal device on a store map displayed therein.

A point of departure 510 is a present location of the terminal device, and a destination 520 is a location of the product. The shortest path from the point of departure 510 to the destination 520 is shown with a line.

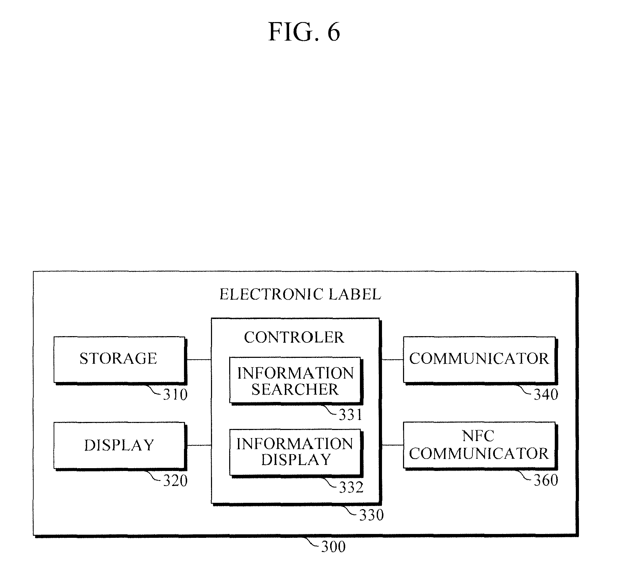

FIG. 6 is a rough diagram illustrating an electronic label according to another exemplary embodiment.

Referring to FIG. 6, an electronic label 300 may further include a near field communicator 360. The NFC communicator 360 receives information on a search request from a terminal device 400 and outputs the information to an information searcher 331.

Here, the NFC communicator 360 may be executed via one or more of NFC, Wi-Fi, and ZigBee.

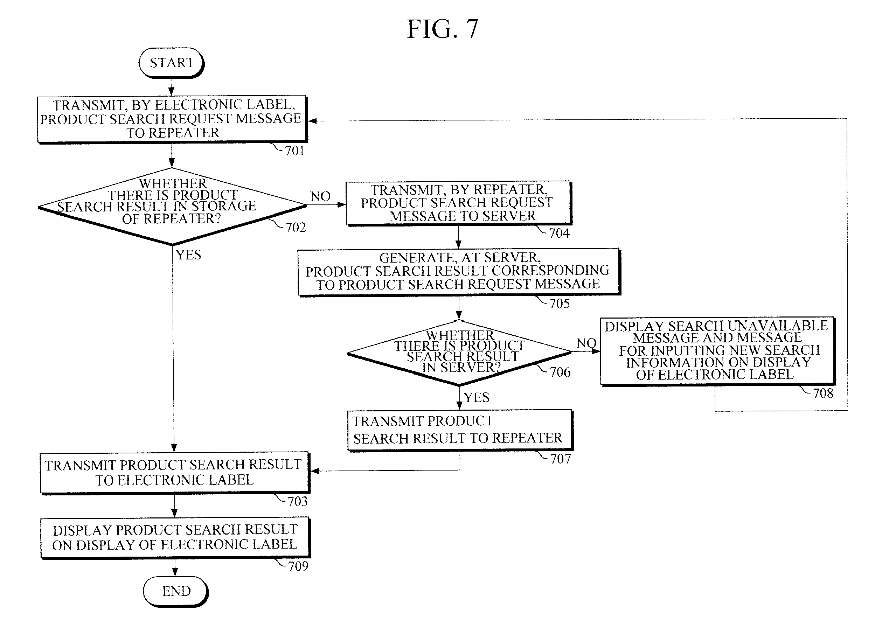

FIG. 7 is a flowchart illustrating a product search method using electronic labels according to an exemplary embodiment.

Referring to FIG. 7, a product search method using an electronic label includes the following operations: transmitting, by an electronic label, a product search request message to a repeater in 701; searching, by the repeater in storage, whether there is a product search result corresponding to the product search request message in 702; after the search, if the a product search result exists, transmitting the product search result to the electronic label in 703; if no product search result exists, transmitting the product search request message to a server in 704; searching a database according to the product search request message and generating the product search result in 705; transmitting the generated product search result to the electronic label through the repeater in 707; and displaying the product search result that the electronic label has received in 709.

A procedure which is described below including one exemplary embodiment may be implemented in various forms. The product search method using the electronic label, illustrated in FIG. 7, is a method by which the electronic label 300 in FIG. 2 is implemented in a system for searching information of an electronic label in FIG. 1. The product search method using the electronic label is briefly described to avoid an unnecessary repetition, and the description with reference to FIGS. 1 to 5 may be, in the same way, applied to what is not specifically described here.

First, the electronic label 300 transmits the product search request message to the repeater 200 in 701. The electronic label 300 may transmit the product search request message to the repeater 200 as being connected to the repeater 200 through wireless networks (e.g., Wi-Fi, Bluetooth®, and ZigBee). The electronic label 300 may be connected to the repeater 200 through wired networks as needed.

Then, the repeater 200 searches, in the storage, whether there is the product search result corresponding to the product search request message in 702. The repeater 200 may store, in the storage, the product search request message which has been received from the electronic label 300, and the product search result which has been received from a server 100.

Then, after the search, if the product search result exists in the storage of the repeater 200, the repeater 200 transmits the product search result to the electronic label 300 in 703. However, if no product search result exists in the storage of the repeater 200, the repeater 200 transmits the product search request message to the server 100 in 704.

Then, the server 100 generates the product search result by searching in a database according to the product search request message in 705. The product search result may include location information on a product.

Then, if the product search result exists in the server 100, the generated product search result is transmitted to electronic label 300 through the repeater 200 in 707. However, if the information does not exist in the server 100, the server 100 may transmit the product search unavailable message to the electronic label 300 through the repeater 200. In such a case, the electronic label 300 may display a message for inputting new search information on a display 320 so as to prompt a user to input other information on a search request in 708.

Then, the electronic label 300 displays the received product search result in 709.

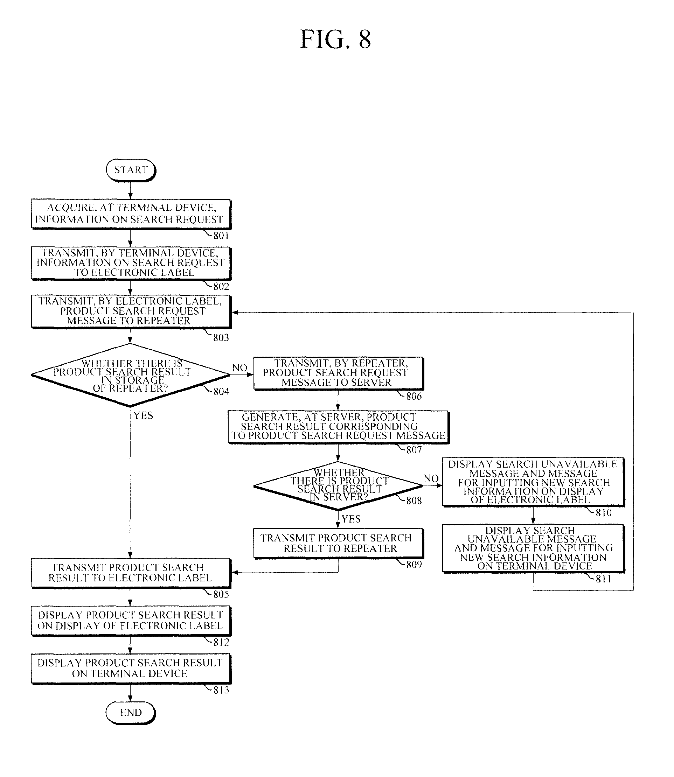

FIG. 8 is a flowchart illustrating a product search method using electronic labels according to another exemplary embodiment.

Referring to FIG. 8, a product search method using an electronic label may further include operations: acquiring, at a terminal device, information on a search request in 801, transmitting, by the terminal device, the information on a search request to an electronic label in 802; and transmitting, by the electronic label, a product search result, which has been received, to the terminal device in 813.

A procedure which is described below including one exemplary embodiment may be implemented in various forms. The product search method using an electronic label, illustrated in FIG. 8, is a method by which the electronic label 300 in FIG. 6 is implemented in a system for searching information of an electronic label in FIG. 1 by using a terminal device 400. The product search method using the electronic label is briefly described to avoid an unnecessary repetition, and the description with reference to FIGS. 1 to 6 may be, in the same way, applied to what is not specifically described here.

First, the terminal device 400 acquires information on a search request in 801. The terminal device 400 may receive an input of information on a search request from a user of the terminal device 400.

Then, the terminal device 400 transmits the information on a search request to the electronic label 300 in 802.

Then, the electronic label 300 transmits a product search request message to the repeater 200 in 803, and the operation of receiving the product search result from the server 100 through the repeater 200 is the same as the description in FIG. 7.

Then, when the electronic label 300 transmits the received product search result to the terminal device 400, the terminal device 400 displays the received product search result in 813.

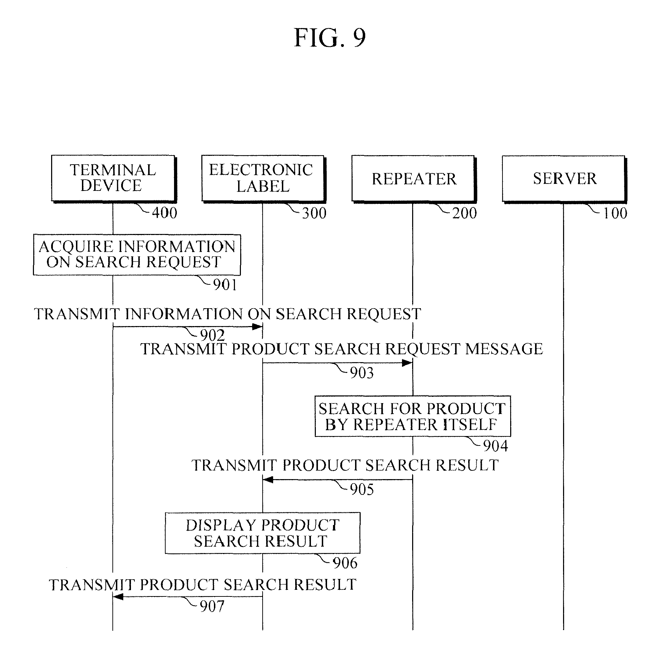

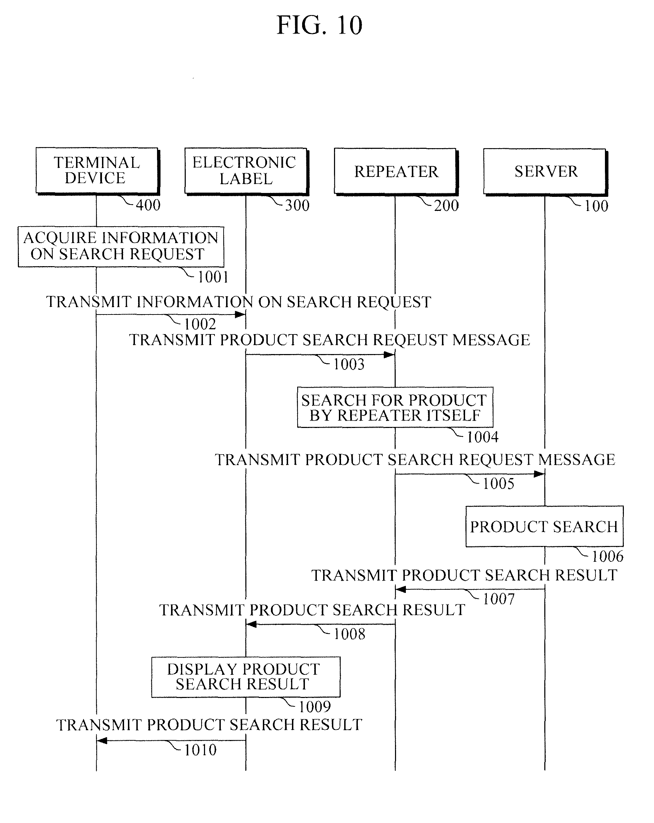

FIGS. 9 and 10 are flowcharts illustrating a product search method using a terminal device and an electronic label according to yet another exemplary embodiment.

The product search method using an electronic label, illustrated in FIGS. 9 and 10, may be a method by which the electronic label 300 in FIG. 6 is implemented in a system for searching information of the electronic label in FIG. 1 by using the terminal device 400. The product search method using the electronic label is briefly described to avoid an unnecessary repetition, and the description with reference to FIGS. 1 to 6 may be, in the same way, applied to what is not specifically described here.

FIG. 9 illustrates an example of transmitting the product search result to the electronic label by the direct use of the repeater without passing through the server in a case in which the product search result is stored in storage of the repeater.

FIG. 10 illustrates an example of transmitting the product search request message to the server and transmitting the information from the server to the electronic label through the repeater in a case in which the product search result is not stored in storage of the repeater.

A number of examples have been described above. Nevertheless, it should be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

## Claims

1. A system for searching information of an electronic label, the system comprising:
a server configured to receive a product search request message and transmit a product search result corresponding to the product search request message;
a repeater configured to relay information; and
an electronic label configured to display product information received from the server, the electronic label comprising:
a communicator configured to perform communications with the repeater;
storage;
a display; and
a controller comprising information searcher configured to generate the product search request message from information on a search request that a user has input and transmit the product search request message to the repeater, and an information display configured to control the product search result to be displayed on the display.

2. The system of claim 1, wherein the electronic label further comprises an input configured to receive an input of the information on a search request from the user and output the information on a search request to the information searcher.

3. The system of claim 1, wherein the repeater is configured to store, in the storage, the product search request message received from the electronic label, and the product search result received from the server; and further comprises a search cache configured to transmit, to the electronic label, the product search result of the storage in a case in which the product search result corresponding to the product search request message exists in the storage.

4. The system of claim 1, wherein the product search result comprises a product location.

5. The system of claim 1, further comprising:
a terminal device comprising a search result display configured to receive an input of the information on a search request from the user, transmit the information on a search request to the electronic label, receive the product search result from the electronic label, and display the product search result.

6. The system of claim 5, wherein the terminal device further comprises a product location display configured to display, on a store map, a product location amid the received product search result.

7. The system of claim 6, wherein the product location display comprises:
a product location calculator configured to calculate and output a product location from the received product search result;
a terminal location calculator configured to acquire and output a present location of the terminal device from an indoor positioning system (IPS); and
a map display configured to display the product location and the present location of the terminal device on the store map.

8. The system of claim 5, wherein the electronic label further comprises a near field communicator configured to receive the information on a search request from the terminal device and transmit the information on a search request to the information searcher.

9. The system of claim 8, wherein the NFC communicator is configured to be executed via one or more of NFC, Wi-Fi, and ZigBee.

10. A product search method using an electronic label, the product search method comprising:
transmitting, by an electronic label, a product search request message to a repeater;
searching, by the repeater in storage, whether there is a product search result corresponding to the product search request message;
transmitting the product search result to the electronic label in response to a search result indicating that the product search result exists in the storage, and transmitting the product search request message to a server in response to a search result indicating that the product search result does not exist in the storage;
at the server, searching a database based on the product search request message and generating the product search result;
transmitting the generated product search result to the electronic label through the repeater; and
displaying, at the electronic label, the transmitted product search result.

11. The product search method of claim 10, wherein the searching of the product further comprises:
acquiring, at a terminal device, information on a search request;
transmitting, by a terminal device, the information on a search request to the electronic label; and
transmitting, by the electronic label, the transmitted product search result to the terminal device.

12. An electronic label, comprising:
a communicator configured to perform communications with a repeater;
storage;
a display configured to display received product information;
a controller comprising an information searcher configured to generate a product search request message from information on a search request that a user has input and transmit the product search request message to a repeater, and an information display configured to control a product search result to be displayed on the display.

13. The electronic label of claim 12, further comprising an input configured to receive an input of the information on a search request from the user and output the information on a search request to the information searcher.

14. The electronic label of claim 13, wherein the input is a touch panel.

15. The electronic label of claim 12, wherein the product search result comprises a product location.
